# EUROPEAN PATENT APPLICATION

(11) **EP 3 834 996 A1**
(43) Date of publication of application: **16.06.2021**
(21) Application number: 20210852.8
(22) Date of filing: 01.12.2020
(51) Int. Cl.: B25J 5/00, B25J 15/00, B65G 1/137

(54) **A CONTROL APPARATUS, A METHOD AND A COMPUTER PROGRAM PRODUCT FOR A ROBOT**

(30) Priority: 02.12.2019 FI 20196043
(71) Applicant: RoyceBot Oy, 33100 Tampere (FI)
(72) Inventor: Oja, Miika, 33100 Tampere (FI); Luuppala, Harri, 33880 Lempäälä (FI)
(74) Representative: Berggren Oy

(57) **Abstract**

The invention relates to a control apparatus (6) and a method for a robot (1), and a robot (1). The robot (1) comprises means (4) for moving the robot; means for obtaining information of an environment of the robot; means (8) for obtaining information of a position of the robot; means (6.3) for receiving control instructions for the robot (1); and means (8) for generating power for operation of the robot (1). The control apparatus (6) comprises means (6.2) for obtaining a programmed route, which comprises information of one or more route points. The control apparatus (6) further comprises means (6.6, 4) for driving the robot (1) to a route point of the programmed route; gripping an item of a cargo by the first grippers (5.2); lifting the item above the second grippers (5.3); and activating the second grippers (5.3) to keep the item lifted.

## Description

### Technical field

The present invention relates to a control apparatus for controlling a robot, which comprises means for moving the robot; means for obtaining information of an environment of the robot; means for obtaining information of a position of the robot; means for receiving control instructions for the robot; and means for generating power for operation of the robot. The invention also relates to a method and a computer program product for controlling a robot.

### Background

Autonomously moving robots, which may also be called as autonomously moving vehicles, have been used in many practical applications such as vacuuming robots, lawn mowers and autonomous forklifts. Such robots may be guided by wires which define the area within which they are allowed to move, or they may use sensors to detect walls, obstacles, door openings and other objects which may affect the area in which they are allowed to travel. Those kinds of robots usually have some kind of memory to store the map of the environment so that once the robot has learned the area it can later utilize the map to determine the allowed area and restrict the movements accordingly.

One problem with the above kinds of processes is that a certain guidance (e.g. the wire) is needed or a relatively long time period is needed to learn the environment. Moreover, the examining-and-learning method may not provide an optimum route for movements of the robot.

### Summary

One aim of the present invention is to provide an improved route-programming process. Another aim is to provide more autonomy for the robot. In accordance with an embodiment, the method comprises a route programming mode in which the robot is taught several points (locations) of a route by manually moving the robot to a desired location and set to a desired position, after which a command is given to tell the robot that it is now at one point of the route. Then, the robot can be moved to a next location of the route and again the command is given to tell the robot that it is now at another point of the route.

The procedure can be repeated until all desired locations have been taught. The route programming mode may also include a step in which the robot is taught a location of a charging station (a.k.a. a charger) wherein the robot becomes aware of the location where it should move itself when the battery of the robot needs recharging.

According to a first aspect there is provided a control apparatus for a robot, the robot comprising means for moving the robot; means for obtaining information of an environment of the robot; means for obtaining information of a position of the robot; means for receiving control instructions for the robot; first grippers; second grippers; and means for generating power for operation of the robot, wherein the control apparatus comprises:
means for obtaining a programmed route, which comprises information of one or more route points;
means for driving the robot to a route point of the programmed route;
gripping an item of a cargo by the first grippers;
lifting the item above the second grippers; and
activating the second grippers to keep the item lifted.

According to a second aspect there is provided a method for a robot, the method comprising:
obtaining a programmed route, which comprises information of one or more route points;
driving the robot to a route point of the programmed route;
gripping an item of a cargo by a first grippers of the robot;
lifting the item above a second grippers of the robot; and
activating the second grippers to keep the item lifted.

According to a third aspect there is provided a control apparatus comprising at least one processor; and at least one memory including computer program code the at least one memory and the computer program code configured to, with the at least one processor, cause a control apparatus to perform at least the following:
obtaining a programmed route, which comprises information of one or more route points;
driving the robot to a route point of the programmed route;
gripping an item of a cargo by a first grippers of the robot;
lifting the item above a second grippers of the robot; and
activating the second grippers to keep the item lifted.

According to a fourth aspect there is provided a robot comprising:
means for moving the robot;
means for obtaining information of an environment of the robot;
means for obtaining information of a position of the robot;
means for receiving control instructions for the robot;
means for generating power for operation of the robot, and
a control apparatus

According to a fifth aspect there is provided a control apparatus for a robot, the robot comprising means for moving the robot; means for obtaining information of an environment of the robot; means for obtaining information of a position of the robot; means for receiving control instructions for the robot; and means for generating power for operation of the robot, wherein the control apparatus comprises:
a) means for entering a route programming mode;
b) means for obtaining information of a current location and position of the robot;
c) means for instructing the robot to store a current location and position of the robot as one point of a desired travelling route; and
d) means for instructing the robot to exit the route programming mode.

According to a sixth aspect there is provided a method for a robot, the robot comprising means for moving the robot; means for obtaining information of an environment of the robot; means for obtaining information of a position of the robot; means for receiving control instructions for the robot; and means for generating power for operation of the robot, wherein the method comprises:
a) instructing the robot to enter a route programming mode;
b) moving the robot to one point of a desired travelling route;
c) indicating that the current location is one location of the desired travelling route;
d) repeating steps b) and c) until all points of the desired travelling route have been indicated; and
e) instructing the robot to exit the route programming mode.

According to a seventh aspect, there is provided a control apparatus comprising at least one processor; and at least one memory including computer program code the at least one memory and the computer program code configured to, with the at least one processor, cause the control apparatus to perform at least the following:
a) entering a route programming mode;
b) obtaining information of a current location and position of the robot;
c) instructing the robot to store a current location and position of the robot as one point of a desired travelling route; and
d) instructing the robot to exit the route programming mode.

According to an eighth aspect there is provided a computer readable storage medium stored with code thereon for use by a control apparatus, which when executed by a processor, causes the control apparatus to perform:
a) entering a route programming mode;
b) obtaining information of a current location and position of the robot;
c) instructing the robot to store a current location and position of the robot as one point of a desired travelling route; and
d) instructing the robot to exit the route programming mode.

According to a ninth aspect there is provided a control apparatus for a robot, the robot comprising at least one actuator for moving the robot; at least one sensor for obtaining information of an environment of the robot; a positioning circuitry for obtaining information of a position of the robot; a control input for receiving control instructions for the robot; and a battery for generating power for operation of the robot, wherein the control apparatus comprises:
a) a first control element for entering a route programming mode;
b) a memory for storing information of a current location and position of the robot;
c) a second control element for instructing the robot to store a current location and position of the robot as one point of a desired travelling route; and
d) a third control element for instructing the robot to exit the route programming mode.

According to a tenth aspect there is provided a control apparatus for a robot, the robot comprising means for moving the robot; means for obtaining information of an environment of the robot; means for obtaining information of a position of the robot; means for receiving control instructions for the robot; and means for generating power for operation of the robot, wherein the control apparatus comprises:
a) means for driving the robot to a route point to pick up an item of a cargo;
b) means for gripping the item;
c) means for lifting and lowering the item;
d) means for measuring weight of the item; and
e) means for releasing the item.

According to an eleventh aspect there is provided a method for a robot, the robot comprising means for moving the robot; means for obtaining information of an environment of the robot; means for obtaining information of a position of the robot; means for receiving control instructions for the robot; and means for generating power for operation of the robot, wherein the method comprises:
a) driving the robot to a route point to pick up an item of a cargo;
b) gripping the item;
c) lifting the item;
d) measuring weight of the item;
e) lowering the item; and
f) releasing the item.

According to a twelfth aspect, there is provided a control apparatus comprising at least one processor; and at least one memory including computer program code the at least one memory and the computer program code configured to, with the at least one processor, cause the control apparatus to perform at least the following:
a) driving the robot to a route point to pick up an item of a cargo;
b) gripping the item;
c) lifting the item;
d) measuring weight of the item;
e) lowering the item; and
f) releasing the item.

According to a thirteenth aspect there is provided a computer readable storage medium stored with code thereon for use by a control apparatus, which when executed by a processor, causes the control apparatus to perform:
a) driving the robot to a route point to pick up an item of a cargo;
b) gripping the item;
c) lifting the item;
d) measuring weight of the item;
e) lowering the item; and
f) releasing the item.

According to a fourteenth aspect there is provided a control apparatus for a robot, the robot comprising means for moving the robot; means for obtaining information of an environment of the robot; means for obtaining information of a position of the robot; means for receiving control instructions for the robot; and means for generating power for operation of the robot, wherein the control apparatus comprises:
a) a first control element for driving the robot to a route point to pick up an item of a cargo;
b) a gripper configured to grip and release the item;
c) load carrying implement configured to lift and lower the item; and
d) a second control element configured to measure weight of the item.

Some advantageous embodiments are defined in the dependent claims.

The route programming method may be simpler and faster and even more accurate than prior art methods. The robot is moved manually to those route locations in which the robot should visit during normal operation wherein possible errors in external route indications can be avoided. Moreover, changes in the route can be easily made by repeating the programming mode and deleting information of those possible route locations which no more belong to the desired travelling route.

### Brief description of the drawings

In the following the present invention will be described in more detail with reference to the appended drawings, in which
- Fig. 1: shows an example of a robot as a perspective view, in accordance with an embodiment;
- Fig. 2: shows as a simplified block diagram some elements of a control apparatus for controlling operation of the robot;
- Fig. 3: shows as a simplified view an example of a desired route and some route points;
- Fig. 4: shows a flow diagram of a route programming method, in accordance with an embodiment;
- Fig. 5: shows a flow diagram of a cargo collection method, in accordance with an embodiment;
- Figs. 6a to 6c: illustrate some examples of the load carrying implement of a cargo delivery robot;
- Figs. 7a to 7h: illustrate some example situations of picking items of cargo by a cargo delivery robot; and
- Fig. 8: illustrates another example of cargo grippers, in accordance with an embodiment.

### Detailed description

First, meaning of terms location and position used in this application will be defined to make them distinguishing from each other. The term location describes a point in a space (e.g. in a room, in a building, outside space, etc.). The location may be expressed with e.g. two-dimensional (2D) or three-dimensional (3D) coordinates or with latitude-longitude information or with latitude-longitude-height information. The term position means a position or pose the robot has with respect to the surroundings. For example, the position may be such that a front face of the robot is directed away (e.g. perpendicular) from a wall, parallel to the wall, etc. In other words, the position is not expressed with absolute coordinates but with a relation to something, e.g. a wall, a charge station, a stack of cargo, etc.

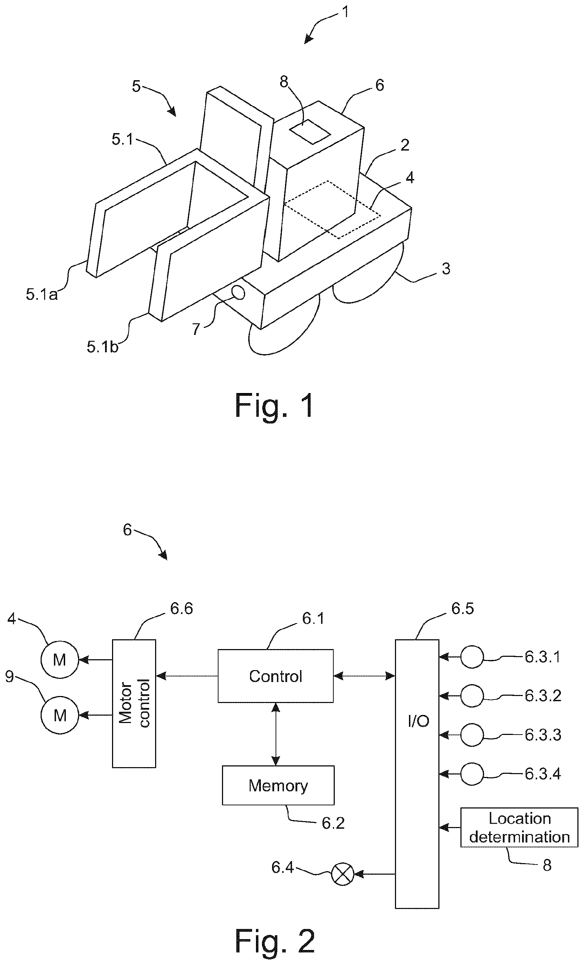

Fig. 1 shows an example of a robot 1 as a perspective view, in accordance with an embodiment. The robot 1 comprises a chassis 2, wheels 3, a motor 4 (illustrated with a dotted rectangle in Fig. 1), a load carrying apparatus 5, and a control apparatus 6 for controlling operations of the robot 1. In addition, the robot 1 may comprise sensors 7 for observing environment of the robot 1. The robot 1 may also comprise breaks for the wheels or the motor 4 may be used as the breaks, a location determining element 8, and other components, elements and/or circuitry not mentioned here.

The location determining element 8 may be a receiver of a satellite based positioning system, such as the GPS, Galileo, Glonass, etc., and/or a wifi based positioning system and/or a positioning system utilizing so called beacons. As an alternative or additionally, the location determining element 8 may be based on some kind of sensor based mapping system. The location determining element 8 may perform a so-called SLAM operations (Simultaneous Localization and Mapping) in which the system tracks the location of the robot 1 and changes in the location and generates a map of the environment on the basis of the locations and possible obstacles/objects the robot 1 has detected during the travel.

The location determining element 8 may comprise three-dimensional time-of-flight camera (3D TOF) which captures images of the environment of the robot 1 and the controller 6.1, for example, may construct a point cloud of the environment on the basis of the images. With the help of the point cloud the map of the environment and possible obstacles/objects can be formed and updated.

Fig. 2 shows as a simplified block diagram some elements of the control apparatus 6 for controlling operation of the robot 1. The control apparatus 6 comprises a controller 6.1, such as a processor, a microprocessor, a microcontroller or another entity capable of executing computer code. The control apparatus 6 also comprises a memory 6.2 for storing computer code, data, parameters etc. There is also a set of keys 6.3 for receiving instructions/commands entered by a user of the robot, a set of indicator lights 6.4 and an input/output unit 6.5 for interfacing with sensors, actuators, keys, lamps, motors etc. The keys 6.3 may be, for example, push-buttons, switches or other electric elements which have at least two different positions, one of which for activating the key (e.g. closing a switch) and another for deactivating the key (e.g. opening the switch).

The set of keys 6.3 may comprise separate keys for different operations and/or one key may be programmed to perform more than one operation. In accordance with an embodiment, the set of keys 6.3 comprise at least the following keys:
- a programming key 6.3.1. for entering/exiting a programming mode;
- a route point setting key 6.3.2 for programming a route point and for removing a programmed route point;
- a start/stop key 6.3.3. for starting/stopping the robot.

The set of keys 6.3 may also comprise, for example, a user definable key 6.3.4 for enabling a user to define a desired operation which can be started and stopped by the user definable key 6.3.4. The desired operation may be, for example, programmed by the user or selected from pre-programmed operations.

Different keys may be marked with different colours, with buttons having different shapes (e.g. a triangle, a square, a circle, a star, etc.).

In accordance with an embodiment, the control apparatus 6 may be or may include a tablet computer, a laptop computer, a mobile phone or some other device comprising appropriate elements to implement control operations for the robot 1 and which can interface with some elements of the robot, such as the sensors. The interface may be a wireless or wired interface or both. For example, the so-called Bluetooth™ system may be used as the wireless connection and a USB connection (universal serial bus) as the wired connection.

It can be assumed that the control apparatus 6 has several operating modes for different situations. In accordance with an embodiment, those modes include a normal operating mode M1 and a route programming mode M2 but also other modes may exist. It is assumed that the robot 1 has been started (power has been switched on) and the control apparatus 6 has been initialized and is in the normal operating mode M1. However, in accordance with an embodiment the control apparatus 6 may enter a route programming mode M2 after powered on instead of the normal operating mode M1.

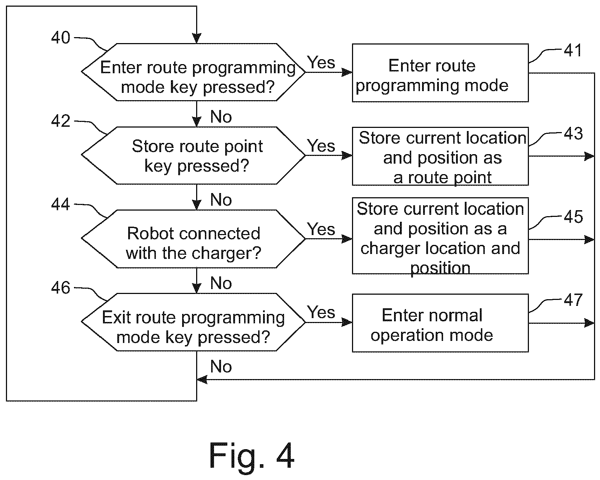

In the following, the operation of the robot 1 and the control apparatus 6 for programming a route will be described with reference to the flow diagram of Fig. 4, in accordance with an embodiment. In this example, it is assumed that the set of keys 6.3 comprises a separate key for different control operations but it may also be possible that two or more control operations are performed utilizing the same key, for example pressing a key once may actuate one operation and pressing the same key twice within a short period may actuate another operation. Further, pressing the same key may be used for entering a certain mode and exiting the mode, because entering, for example, the programming mode more than once without exiting the programming mode may not be feasible.

The programming mode M2 is entered by pressing a programming key 6.3.1. It may be defined that only a short keystroke (shorter than a predetermined time) does not initiate the operation of the key but the time the key is pressed should exceed the predetermined time i.e. the length of the keystroke is longer than the predetermined time. As an example, the predetermined time is 3 s but may be longer (e.g. 5 s) or shorter (e.g. 2 s) than that. After recognizing that the programming key 6.3.1 has been pressed long enough (Block 40 in Fig. 4) the controller 6.1 deduces that the programming mode M2 should be started. Therefore, the controller 6.1 changes 41 the operation to the programming mode M2. The controller 6.1 may provide an indication that the controller 6.1 has entered the programming mode M2, for example, by a control operation which switches on a led (light emitting diode) of the set of indicator lights 6.5 wherein the led begins illuminate light. There may be, for example, a switch (not shown) coupled with an output line of the controller 6.1 so that the switch is either on (the led illuminates) or off (the led does not illuminate).

In the programming mode M2 the controller 6.1 releases a motor so that the robot 1 can be moved without using the motor, in other words, the wheels are free to rotate without the motor braking the wheels. The location determining element 8 is operating for obtaining information of a location of the robot 1. The location information may be stored to the memory 6.2 sequentially and/or when instructed by the controller 6.1. The user may move the robot 1 to a charging station 12 to indicate where the charging station 12 is located and in which direction the robot 1 should arrive to the charging station 12 when the battery of the robot 1 needs recharging. When a charging connector of the robot 1 is coupled with a charging output connector of the charging station 12, a charging circuitry of the robot 1 indicates 44 to the controller 6.1 that the robot 1 is coupled with the charging station 12. Now, because the robot 1 is in the programming mode, charging of the battery is not (necessarily) started but the controller 6.1 stores 45 the current location and position of the robot 1 as an indication of the charging station 12. The controller 6.1 may also cause the apparatus 6 to generate an indication to the user that the location and position of the charging station 12 has been successfully stored. The user may then move the robot 1 to a first route point P1. When the user has moved the robot 1 to the first route point P1 and set the robot 1 in a desired position at the route point P1 (e.g. facing away from a wall), the user presses a route point setting key 6.3.2 which indicates 42 to the controller 6.1 that the current location and position of the robot 1 corresponds with the location of the first route point P1 and the position of the robot 1 at the first route point P1. The controller 6.1 stores 43 the location and position information to the memory 6.2. The user may move the robot 1 to a second route point P2 and press the route point setting key 6.3.2 to indicate that the current location and position of the robot 1 corresponds with the location of the second route point P2, wherein the controller 6.1 stores the location and position information to the memory 6.2 as the second route point P2. The above procedure may be repeated for each desired route point. As a result of the route point setting operation a list of route points may have been generated and stored into the memory 6.2.

The programming mode can be exited by pressing 46, for example, the programming key 6.3.1 again at least the predetermined time, wherein the controller 6.1 exits 47 the route programming mode M2 and enters, for example, the normal operating mode M1. The controller 6.1 may also control the led to switch off which indicates that the controller 6.1 has exited the programming mode M2, and lock the wheels 3 by the motor.

The robot 1 may then be moved, for example, to the starting location, to the charging station 12 or to a randomly selected location. The location determining element 8 may figure out the current location of the robot 1 and the movement operation of the robot 1 in the normal operating mode M1 may be started. This may be performed, for example, by pressing a start key a predetermined time, wherein the controller 6.1 releases the wheels 3, starts moving the robot 1 to the first route point P1. When the robot 1 has arrived the first route point P1 and the robot 1 has positioned it to the programmed position at the first route point P1, the user may need to press the start key again to confirm that the robot 1 is at the first route point P1, wherein the controller 6.1 may proceed the execution of the computer code so that it controls the control circuitry 6.6 of the motor 4 to start moving the robot 1 to the second route point P2. This procedure may be repeated until the robot 1 has arrived the last route point Pn.

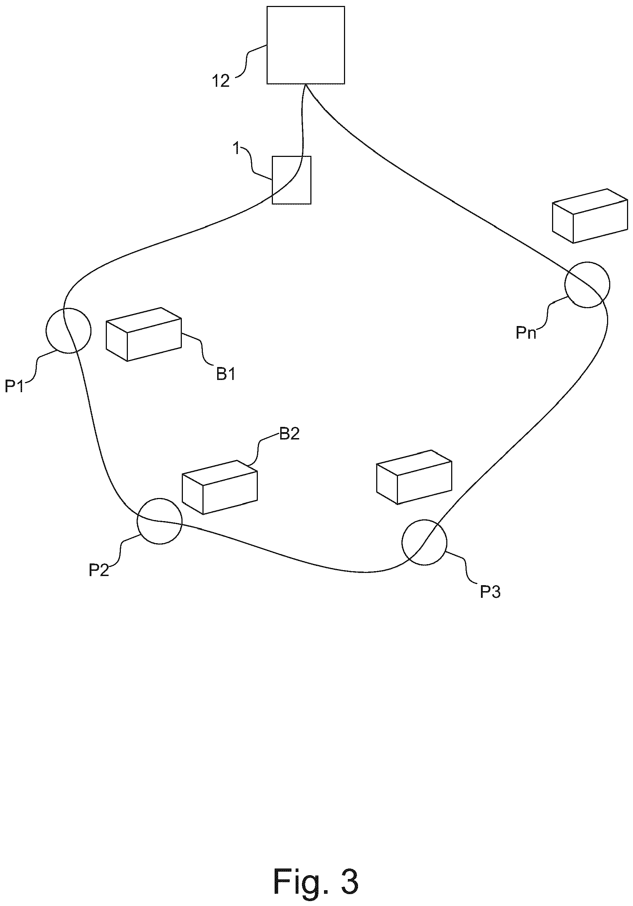

Fig. 3 shows as a simplified view an example of a programmed, desired route and some route points P1, P2, P3, Pn.

In accordance with an embodiment, the user need not press the start key at each route point P1, P2, P3, Pn, but the robot 1 may operate autonomously at the route points after it has been instructed what operations are to be performed at each route point P1, P2, P3, Pn. For example, there may be some cargo (e.g. boxes) at the first route point P1 which should be delivered to other route point(s) P2, P3, Pn. Hence, the robot 1 picks the cargo at the first route point P1 and moves each entity of the cargo to the desired route point(s). An example of this will be described later in this application.

In accordance with another embodiment, the robot 1 has a vacuum cleaner or a lawn mower, wherein the route points may indicate corner points of the area to be cleaned/grass cut.

In accordance with an embodiment, the route points P1, P2, P3, Pn need not be programmed in the correct order but after programming each route point in a random order, the controller 6.1 may solve an optimum route e.g. by using an algorithm configured to solve the so-called travelling salesman problem.

If some route point(s) needs to be removed, the robot 1 may be set to the route programming mode by pressing the programming key 6.3.1, and the robot 1 is moved to the location of the route point to be removed. When the robot 1 is at the route point which should be removed, then pressing the route point setting key 6.3.2 indicates the controller 6.1 that the current route point should be removed from the list of route points P1, P2, P3, Pn.

Accordingly, if the current route point need not be removed but the position of the robot 1 at the current route point should be changed, this may be indicated to the controller 6.1 by, for example, pressing the route point setting key 6.3.2 shortly twice (i.e. shorter time than the above mentioned predetermined time).

In accordance with an embodiment, programmed route point(s) may be removed by utilising an application in the control apparatus 6, which shows locations of route points on a display and the user can then indicate a route point to be removed and give a command to the control apparatus 6 to remove the indicated route point from the route.

When the robot 1 is moving, the sensors gather information about the environment and possible obstacles in the route, wherein the robot 1 can avoid them while moving. Obstacles in the planned route may cause that the controller 1 needs to recalculate the route so that the robot 1 still moves towards the next route point after circumvented the obstacle.

The charging station 12 may comprise spring-loaded connectors and magnet(s) so that when the robot 1 is connecting with the charging station 12, spring-loaded connectors and corresponding receptacles in the charge connector of the robot 1 become coupled so that charging current can flow via the connectors to a charging circuitry of the robot 1 and further to the battery. The robot 1 may comprise a charging controller which takes care of controlling charging of the battery. The battery may comprise a first wire for a negative pole, a second wire for a positive pole, and a middle wire for controlling charging balance of the battery. The charging controller may measure the voltage between the first wire and the middle wire as well as the voltage between the middle wire and the second wire and determine the difference of absolute values of the measured voltages. If the difference is above a predetermined threshold value, the charging controller determines that the battery is defective. Hence, the charging controller prevents or stops charging of the battery and may also provide an indication to the user of the robot 1 about the defect battery. On the other hand, if the difference is not too high (i.e. is not above the threshold), charging of the battery may be continued. The charging controller may also use the measured voltage(s) to determine when the battery is fully charged and can stop charging the battery.

In accordance with an embodiment, the above described charging controller is in the charging station 12, not necessarily in the robot 1.

In accordance with an embodiment, there may be more than one battery, wherein one battery may be in the apparatus controlling the operation of the robot 1, and another battery may be in the implement 5.

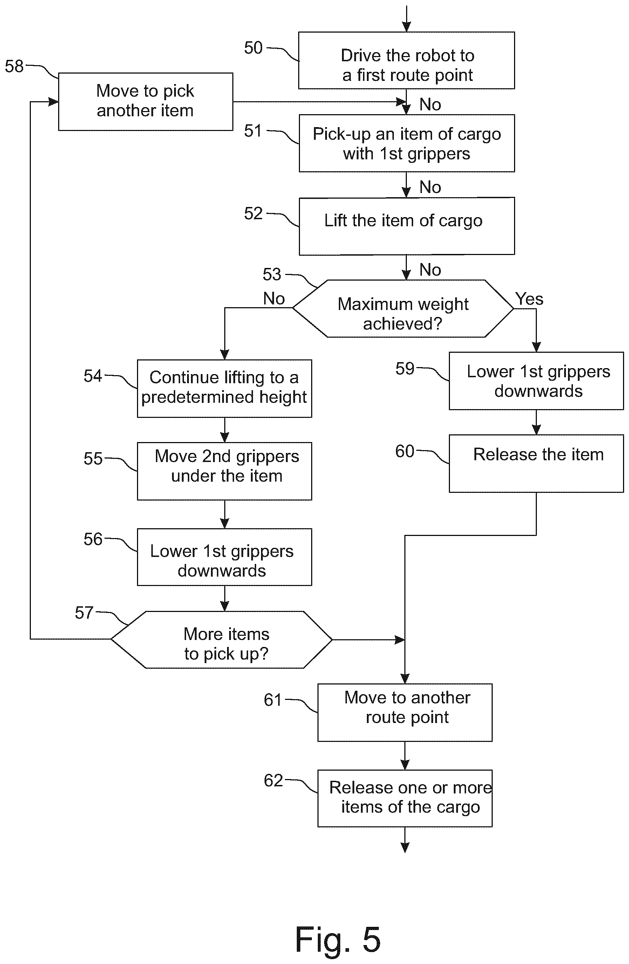

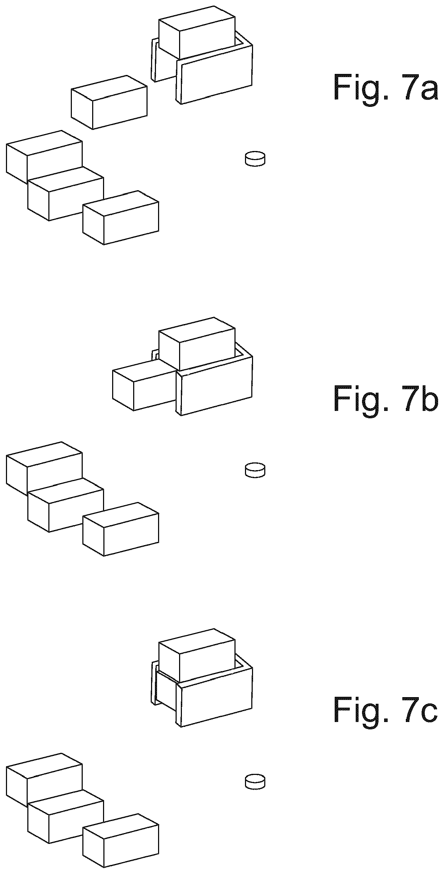

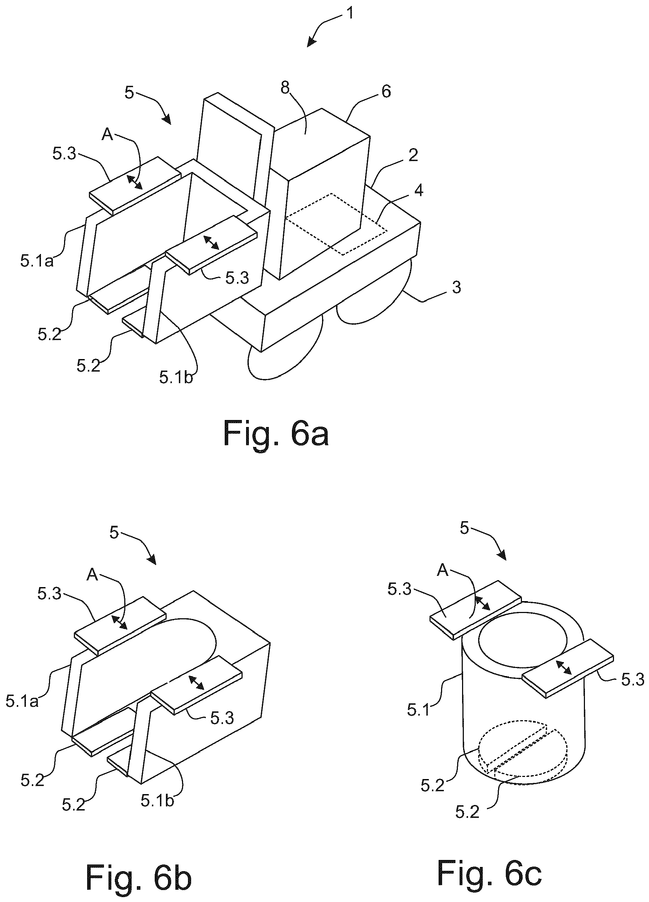

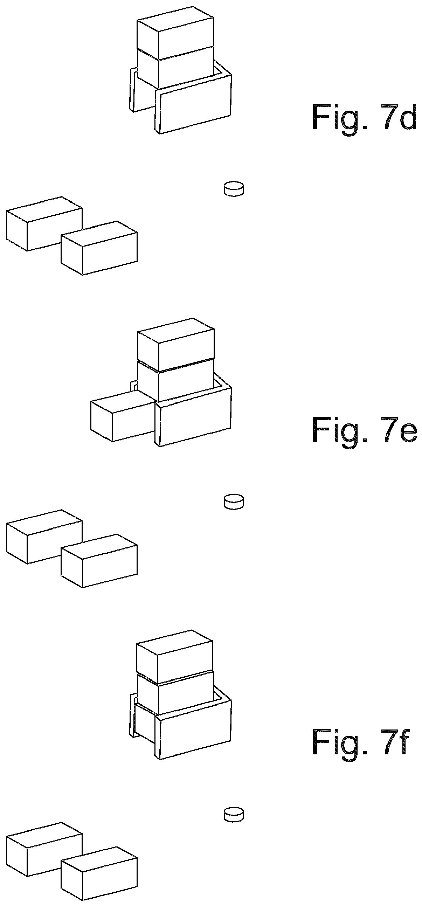

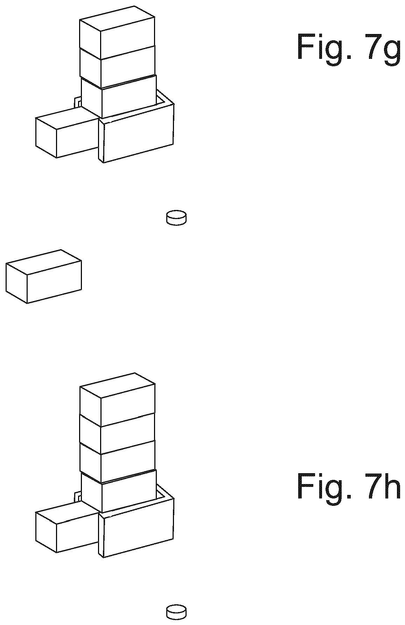

In the following, an example of a cargo delivery robot and a cargo collection method will be described with reference to the examples of the load carrying implement 5 of a cargo delivery robot of Figs. 6a to 6c, the flow diagram of Fig. 5 and examples of Figs. 7a to 7h, in accordance with an embodiment.

Fig. 6a shows the cargo delivery robot 1 having a load carrying implement 5 with a lift beam 5.1, which has a U-formed cross section. The load carrying implement 5 of this embodiment has first grippers 5.2 to grip an item of cargo and second grippers 5.3 to keep lifted cargo in a raised position so that the first grippers 5.2 can be moved downwards, for example to pick and lift another item of cargo. Figures don't show any details how the first grippers 5.2 grip the cargo and move in a vertical direction, but there may be different possibilities for implementing these operations. The same applies to the second grippers 5.3. Fig. 6a only illustrates with arrows A the direction the second grippers 5.3 could be moved when gripping or releasing cargo.

This kind of implement 5 is especially useful for lifting and carrying rectangle shaped items of cargo, such as boxes, so-called EUR-pallets (a.k.a. Euro-pallets, EPA-pallets), etc. The size of the pallets may be, for example, 1/1, ½, ¼, 1/8 or 1/16 of the size of the EUR-pallet.

In accordance with an example, the first grippers 5.2 are suitable for picking an item of cargo at a flange of the cargo which may be at the top of the cargo, for example, wherein the items of cargo need not always be picked from the bottom of the item of cargo.

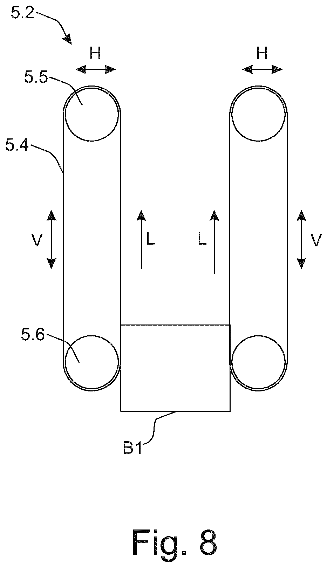

In accordance with an example, the first grippers 5.2 are chain track like grippers at two opposite sides of the lift beam 5.2. The chain track comprises an endless belt 5.4 or chain moving around e.g. a top roller 5.5 and a bottom roller 5.6 like a chain saw, as is illustrated in Fig. 8. When an item of cargo B1 need to be lifted up, the opposite chain tracks may be moved towards each other (illustrated by the arrows H) until they touch steadily with the item of cargo at opposite sides of the item. Then the chain tracks can be started so that they start to move upwards on that side which is touching the item (arrows L), wherein the item of cargo starts to rise. When the bottom top of the item has reached the level of the second grippers 5.3, the chain track can be stopper and the second grippers 5.3 can be moved under the item of cargo wherein it remains along the robot 1.

If there is already one or more other items of cargo along the robot 1, the top of the current item of cargo may rise the one or more other items of cargo upwards until he bottom top of the item has reached the level of the second grippers 5.3. Hence, it is possible to carry a plurality of items of cargo along the robot 1.

Programming of the pick-up of items and release of items may be performed e.g. by utilising an application programming interface (API) of a computer program, wherein an application may be used in which those steps are programmed and the programmed steps are then transmitted to the software of the control apparatus 6.

Fig. 6b shows the cargo delivery robot 1 having a load carrying implement 5 with a lift beam 5.1, which has a semi-circle formed cross section. This kind of implement 5 is especially useful for lifting and carrying rounded shaped items of cargo, such as barrels. Fig. 6c shows the cargo delivery robot 1 having a load carrying implement 5 with a lift beam 5.1, which has a circle-formed cross section. Also this kind of implement 5 is especially useful for lifting and carrying rounded shaped items of cargo, such as barrels, but picking and releasing operations of the cargo differs from picking and releasing operations of the semi-circle shaped lift beam. This will be explained later in this application.

In the following cargo delivery example the load carrying implement 5 of Fig. 6a is used in the cargo delivery robot 1. The cargo delivering route is programmed to the cargo delivery robot 1 e.g. using the route programming method described above. The cargo delivery robot 1 is started, wherein the cargo delivery robot 1 drives 50 to the first route point P1 so that the open end of the lift beam 5.1 of the load carrying implement 5 points towards a box B1 to be picked from the first route point P1. The box B1 represent an item of cargo in this example. The box B1 may have an identifier, such as an RFID-tag (radio frequency identification) an NFC tag (near field communication), a bar code, a QR-code or another code which the load carrying robot 1 is able to examine. For example, the load carrying robot 1 may comprise a camera and an image recognition software to read optical codes (bar code, QR-code) and interpret the code. Alternatively or in addition, the load carrying robot 1 may comprise an RFID reader for examining information stored in the RFID tag. The information indicated by the identifier may indicate the route point where the box B1 should be moved, or the load carrying robot 1 is informed by some other method where to move the box B1.

When the box B1 is in between the arms 5.1a, 5.1b of the lift beam 5.1, the controller 6.1 of the cargo delivery robot 1 controls the load carrying implement 5 to pick 51 the box B1. This may be performed, for example, so that the arms 5.1 a, 5.1b of the lift beam 5.1 have first grippers 5.2 which grip the box B1 from sides of the box B1 or from the bottom of the box B1. In the latter alternative the first grippers 5.2 may have a first set of cantilever brackets (e.g. one or two in each lift beam 5.1) which is moved under the box B1. When the box B1 has been gripped, a lifting operation can be started to lift 52 the box B1 from the ground. The controller 6.1 instructs a motor control block 6.6 to start a lifting motor 9 so that the lift beam 5.1 starts to rise. During lifting the box B1, the controller 6.1 may examine 53 the weight of the box B1. This may be performed, for example, by measuring current the lifting motor 9 draws from the battery. The memory may have a look-up table or some other conversion information or an algorithm or a function which indicates the weight as a function of the current. This kind of conversion information may have been pre-programmed or achieved by a test setup in which different weights are used and corresponding currents are measured.

If the weight determination reveals that weight of the cargo currently loaded to the load carrying implement 5 is not too high i.e. is below a predetermined maximum limit, lifting of the box B1 can be continued until it reaches 54 a predetermined height in the load carrying implement 5. At this stage second grippers 5.3 (e.g. a second set of cantilever brackets) may be moved 55 under the box B1, wherein the first grippers 5.2 can be moved 56 downwards and the box B1 is carried by the second grippers 5.3. The location of the second grippers 5.3 is advantageously such that there is enough room for another box under the box B1.

If there is another box B2 at the first route point P1 to be moved to another route point P2, P3, Pn (block 57), the cargo delivery robot 1 moves 59 so that the another box B2 is between the arms 5.1a, 5.1b of the lift beam 5.1. Gripping 51 and lifting 52 of the box B2 can be started and the weight measured 53. If the total weight of the cargo (i.e. the weight of the stack of boxes B1, B2) is below the predetermined maximum limit, lifting of the box B2 can be continued 54 until the top of the box B2 touches the bottom of the box B1. It may still be possible to continue the lifting, wherein also the box B1 begins to rise, until the bottom of the box B2 reaches the level of the second grippers 5.3 and the second grippers 5.3 can be moved 55 under the latest picked item of cargo to keep the stack of items lifted and carried by the lift beam 5.1.

If the weight determination reveals that weight of the cargo currently loaded to the load carrying implement 5 is too high i.e. is not below the predetermined maximum limit, lifting of the box B1 is stopped and the load carrying implement 5 is lowered 59 to ground level (or another platform) so that the latest lifted item is left 60 on the ground (or the another platform) and the robot 1 can begin to move 61 to another route point P2, P3, Pn where the robot 1 should leave one or more picked items of cargo.

In addition to the weight the cargo delivering robot 1 may be able to measure the height of the cargo, wherein if the height of the cargo reaches a maximum height, no more cargo is picked before some of the cargo already picked up by the robot 1 has been released. Measurement of the height may also be performed during lifting the cargo and the lifting is stopped, if the height reaches the maximum height although the bottom of the cargo is still below the second grippers 5.3.

In accordance with an embodiment, the combination of weight and height of the cargo is used to determine whether more cargo can be picked-up or not. For example, if the weight of the cargo is well below the maximum weight, it may be possible to pick up more cargo although it would mean that the maximum height of the cargo would be exceeded. On the other hand, if the weight of the cargo is well below the maximum height, it may be possible to pick up more cargo although it would mean that the maximum weight of the cargo would be exceeded.

When all boxes B1, B2 have been picked 58 from the first route point P1 (or the maximum weight and/or the maximum height has been reached), the cargo delivery robot 1 starts to move 61 to the next route point, for example to the second route point P2. When the cargo delivery robot 1 reaches the next route point, that part of the cargo which is indicated to be moved to this route point, is removed 62 from the load carrying implement 5. If the box lowest in the stack of cargo should be removed, the lifting operation is performed in the reversed order so that the controller 6.1 instructs the motor control block 6.6 to start the lifting motor 9 so that the lift beam 5.1 starts to move downwards until the bottom above the box lowest in the stack of cargo is at the height of the second grippers 5.3, wherein the second grippers 5.3 are activated so that the rest of the stack of cargo (i.e. the box B2 and possible other boxes above the box B2) remains supported by the load carrying implement. The lift beam 5.1 can still be moved downwards until the box lowest in the stack of cargo touches ground (or floor or another platform suitable for receiving cargo). Now the cargo delivery robot 1 can be moved backwards away from the released box B2 and movement to the next route point can be started.

In the above it was assumed that only one box was to be dropped at the route point. However, more than one box can be dropped at a route point. In such a case, the above described operation for removing an item from the stack of cargo can be repeated for each item to be removed.

It may happen that the item of cargo to be removed at a route point is not the lowest one in the stack, wherein the cargo delivery robot 1 should first temporarily remove enough items from the stack until the particular item can be removed, and then the temporarily removed items are picked back to the load carrying implement.

The controller 6.1 may maintain a log in which information of items delivered from one route point to another route point is stored. This information may also be transmitted to e.g. a server of a freight forwarder. The log may also be examined by a user of the robot 1.

In the above description it was assumed that one piece of item was picked at one time but it may also happen that more than one item arranged as a stack of items may be picked at the same time, wherein the robot 1 picks the whole stack by gripping the lowest item in the stack and lifting the stack upwards. Weight and/or height measurements may also be utilized in this case wherein if the weight and/or height of the stack exceeds the maximum weight/height, the robot 1 may give up lifting the stack or may take one or more items out of the stack and when the weight and the height are below the maximum weight/height, the robot 1 may lift the stack of the remaining items.

In accordance with an embodiment, the robot 1 is a vacuum cleaner, which may be implemented e.g. so that the base of the robot 1 is modified to be able to receive a separate vacuum cleaner unit, which is fixed with the base. Power may be supplied to the vacuum cleaner from the battery of the robot 1 or from a separate battery. Suction hose, suction head and possibly some other components of the vacuum cleaner may have also been attached with the robot 1.

The robot 1 can be regarded as a kind of a support frame for different kinds of implements, such as the lawn mower, vacuum cleaner, forklift, load carrying implement, etc.

In a situation in which the the lift beam 5.1 does not have an open end, for example when the lift beam 5.1 has a circle formed cross section having a through-hole, picking and releasing the cargo may be performed so that the robot 1 is driven towards an item of cargo so that the lift beam 5.1 is above the upmost part of the item and when the through-hole of the lift beam 5.1 is above the item, the lift beam 5.1 is moved downwards so that the item is inside the through-hole of the circle-shaped lift beam. The item can then be gripped and lifted by the lift beam 5.1. The item can be removed from the lift beam 5.1 by putting the lift beam 5.1 down, releasing the grippers, and lifting the lift beam 5.1 above the item.

In accordance with an embodiment, the robot 1 may operate as follows when collecting and/or releasing cargo. The controller 6.1 of the robot 1 retrieves e.g. from the memory 6.2 a route to be travelled. When the route has been retrieved the controller 6.1 causes the robot 1 to move to a first route point and start picking up a first cargo unit B1. The controller 6.1 instructs the first grippers 5.2 to grip the first cargo unit B1 and to measure the weight of the first cargo unit B1 and possibly also the height and/or width of the first cargo unit B1. If any of the measured properties exceeds a corresponding limit value, the controller 6.1 prevents lifting the first cargo unit B1 and may indicate to an operator of the robot 1 that the first cargo unit B1 cannot be lifted and moved by the robot 1. On the other hand, if all the measured parameters are within allowed limits the controller 6.1 instructs the grippers 5.2 to lift the first cargo unit B1 upwards and hold the first cargo unit B1 by the second grippers 5.3.

If the current route point has more cargo units to take along, the above procedure may be repeated. However, the robot 1 may not measure the weight, hight and/or width of the second cargo unit but the combination of the first and the second cargo unit and if the combination exceeds any of the allowed limits the controller 6.1 instructs the first grippers 5.2 not to take the second cargo unit along.

When all the cargo at the current route point has been picked up and there is still enough capacity to pick up more cargo, the robot 1 may start moving to the next route point where there is cargo to be picked up. When the robot 1 has arrived the next route point, the robot 1 starts the cargo picking operation as described above. On the other hand, if the previously picked cargo has one or more items to be released at this next route point, the robot 1 first releases such item(s) of cargo and after that starts picking new items of cargo. It is of course possible that at some route points the robot 1 only releases picked up items of cargo or picks up new items of cargo.

If the cargo picked up and carrying by the robot 1 contains an item or more than one item to be released at a current route point and one or more items below the item(s) to be released, the one or more items below the item to be released from the cargo are first removed, then the item to be released is removed from the robot 1 and the removed one or more items are picked up back by the robot 1.

## Claims

1. A control apparatus (6) for a robot (1), the robot (1) comprising means (4) for moving the robot (1); means for obtaining information of an environment of the robot (1); means (8) for obtaining information of a position of the robot (1); means (6.3) for receiving control instructions for the robot (1); first grippers (5.2); second grippers (5.3); and means (8) for generating power for operation of the robot (1), wherein the control apparatus (6) comprises:
means (6.2) for obtaining a programmed route, which comprises information of one or more route points;
means (6.6, 4) for driving the robot (1) to a route point of the programmed route;
gripping an item of a cargo by the first grippers (5.2);
lifting the item above the second grippers (5.3); and
activating the second grippers (5.3) to keep the item lifted.

2. The control apparatus (6) according to claim 1, **characterised in that** the control apparatus (6) further comprises:
means for measuring at least one of a weight and a height of a cargo;
means for examining whether the measured value exceeds a limit; and
means for using the examination result to determine whether the cargo can be lifted.

3. The control apparatus (6) according to claim 2, **characterised in that** the means for using the examination result are configured to:
prevent the robot (1) to lift the cargo if the measurement indicates that a maximum weight or height of the cargo would be exceeded by the cargo.

4. The control apparatus (6) according to claim 2 or 3, **characterised in that** the means for examining are configured to:
take into account cargo already lifted along the robot (1) and a new item of cargo when determining whether the measured value exceeds the limit.

5. The control apparatus (6) according to any of the claims 1 to 4, **characterised in that** the control apparatus (6) is configured to:
examine whether the cargo picked up and carrying by the robot (1) contains items to be released at a current route point; and
release the items to be released before picking up more cargo.

6. The control apparatus (6) according to claim 5, **characterised in that** the control apparatus (6) is configured to, when the cargo picked up and carrying by the robot (1) contains an item to be released at a current route point and one or more items below the item to be released, perform the following ordered operations:
removing the one or more items below the item to be released from the cargo;
removing the item to be released;
picking up back the removed one or more items.

7. The control apparatus (6) according to any of the claims 1 to 4, **characterised in that** the control apparatus (6) further comprises:
a) means (6.3.1) for entering a route programming mode;
b) means (6.5) for obtaining information of a current location and position of the robot;
c) means (6.3.2) for instructing the robot (1) to store a current location and position of the robot as one point of a desired travelling route; and
d) means (6.3.1) for instructing the robot to exit the route programming mode.

8. A method for a robot (1), the method comprising:
obtaining a programmed route, which comprises information of one or more route points;
driving the robot (1) to a route point of the programmed route;
gripping an item of a cargo by a first grippers (5.2) of the robot (1);
lifting the item above a second grippers (5.3) of the robot (1); and
activating the second grippers (5.3) to keep the item lifted.

9. The method according to claim 8, **characterised in that** the method further comprises:
measuring at least one of a weight and a height of a cargo;
for examining whether the measured value exceeds a limit; and
using the examination result to determine whether the cargo can be lifted.

10. The method according to claim 9, **characterised in that** the method further comprises:
preventing the robot (1) to lift the cargo if the measurement indicates that a maximum weight or height of the cargo would be exceeded by the cargo.

11. The method according to claim 9 or 10, **characterised in that** the method further comprises:
taking into account cargo already lifted along the robot (1) and a new item of cargo when determining whether the measured value exceeds the limit.

12. The method according to any of the claims 8 to 11, **characterised in that** the method further comprises:
examining whether the cargo picked up and carrying by the robot (1) contains items to be released at a current route point; and
releasing the items to be released before picking up more cargo.

13. A control apparatus comprising at least one processor (6.1); and at least one memory (6.2) including computer program code the at least one memory and the computer program code configured to, with the at least one processor, cause a control apparatus (6) to perform at least the following:
obtaining a programmed route, which comprises information of one or more route points;
driving the robot (1) to a route point of the programmed route;
gripping an item of a cargo by a first grippers (5.2) of the robot (1);
lifting the item above a second grippers (5.3) of the robot (1); and activating the second grippers (5.3) to keep the item lifted.14. A robot (1) comprising:
means (4) for moving the robot;
means for obtaining information of an environment of the robot;
means (8) for obtaining information of a position of the robot;
means (6.3) for receiving control instructions for the robot (1);
means (8) for generating power for operation of the robot (1), and
a control apparatus (6) according to any of the claims 1 to 7.

14. A robot (1) comprising:
means (4) for moving the robot;
means for obtaining information of an environment of the robot;
means (8) for obtaining information of a position of the robot;
means (6.3) for receiving control instructions for the robot (1);
means (8) for generating power for operation of the robot (1), and
a control apparatus (6) according to any of the claims 1 to 7.

15. The robot (1) according to claim 14, **characterised in that** the robot (1) comprises an implement, which is one of a vacuum cleaner, a lawn mower, a forklift, a load carrying implement.
